# EUROPEAN PATENT APPLICATION

(11) **EP 2 317 412 A1**
(43) Date of publication of application: **04.05.2011**
(21) Application number: 09275102.3
(22) Date of filing: 23.10.2009
(51) Int. Cl.: G05D 1/00, G05D 1/10, G05B 9/00

(54) **Safety management system**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

In a safety management system for equipment adapted to operate autonomously in a real-time environment, both a deterministic processor and a non-deterministic processor are provided for processing incoming alerts and generating control signals in response. The non-deterministic processor can deal with unrehearsed, complex and unpredictable situations, by providing essentially open-ended procedures working in large search spaces with no guarantee of a solution. The deterministic processor monitors behaviour of the non-deterministic processor and validates control signals produced by it against safety policies. The deterministic processor also provides an intelligent interface to the non-deterministic processor, which receives alerts only from the deterministic processor, and enforces time-critical delivery of responses.

## Description

The present invention relates to a safety management system for equipment having a safety monitoring and control system operating in a real-time environment. Embodiments of the invention find particular application in the management of emergent behaviour, for example arising in the control of autonomous or unmanned vehicles.

It is known to provide automated control of equipment which can respond in real time to developments. Developments might be in the environment of the equipment but may also relate to the health of the equipment itself.

Equipment under automated control may be autonomous in that it makes and carries out decisions without real-time human input. An example is an autonomous vehicle that can carry out a mission during which it navigates, manoeuvres and executes tasks entirely on its own, without a human driver or pilot, and without remote control. Autonomous equipment may in practice be semi-autonomous, this normally operating under human supervision but temporarily reverting to full autonomy if for example a communications link to a supervisor is broken.

Through the use of sensors and positioning systems, a known form of autonomous equipment makes decisions in reaction to circumstances based on a set of possible courses of action. For example, it may use pre-scripted responses to expected events, actions or failures. However, equipment may need to be capable of reasoning in situations it has never before encountered and, by definition, in which it has never been tested. These situations can be dealt with by using a control system that can 'self-organise', enabling it to adapt to new situations. For example, the system might compare a new situation with several that are familiar, and identify steps that would make it converge to one of these.

A technology that has been developed to provide such behaviour is that of software agents. Agents can be given the ability to reason, for instance by being equipped with algorithms known from artificial intelligence such as genetic algorithms, neural networks and Bayesian belief networks. They can perform sequences of operations based on messages they receive, their own internal beliefs (data or information they hold) and on pre-determined goals. (A goal is a rule that activities of the agent should comply with or contribute to, such as "avoid obstacle" or "go to target"). Agents can co-operate to achieve a desired goal. Importantly, software agents have their own thread of execution, localizing not only code and state but their invocations as well. This allows an agent to be persistent: that is, having code that is not executed on demand by something else but runs continuously and decides for itself when it should perform some activity.

Thus a software agent suitable for use in equipment under automated control is a persistent software entity having its own thread of execution and a communications interface, data storage capability for storing at least one predetermined goal and for storing and/or modifying other data, and code for reasoning. The reasoning might be in response to information received via the interface, in light of the at least one goal and other data, for the purpose of deciding on an action to perform a task. The action might be for instance task selection, prioritization and/or outputting a message to another agent or entity. In general, agents perceive the context in which they operate, via the interface, and react to it appropriately.

Optionally, agents may adapt, learn and/or collaborate on a task. They can adapt, for example by choosing alternative problem-solving rules or algorithms, through the discovery of problem solving strategies or by changing other aspects of an agent's internal construction, such as storage resources. They can learn, for example by trial and error or by example and generalisation.

Standard mechanisms and specifications have been developed for ensuring interoperability of autonomous agents, for use in a real-time, embedded, agent-based environment. For example, at the very minimum the following will usually be required:
a) a common agreed means by which agents can communicate with each other so that they can exchange information, delegate control tasks, etc
b) facilities whereby agents can locate each other
c) a unique way of agent identification
d) a means of interacting with non-agent entities, such as other software applications or users.

The Foundation for Intelligent Physical Agents ("FIPA") has for example published a specification which establishes a logical reference model for the creation, registration, location, communication, migration and retirement of agents. It also specifies an interface necessary to support interoperability between agent systems.

However, agents are not suited to use in every situation. The intelligent behaviours described above, for dealing with unrehearsed, complex and unpredictable situations, may all involve essentially open-ended procedures working in large search spaces with no guarantee of a solution. This is not an approach to problem solving that lends itself to safety-critical environments.

A term sometimes used to describe an operating environment for an agent-based system is the "agent framework". It is known to provide an agent monitoring function in the agent framework to ensure that agents are still running. For example, it is known to check that progress is still being made by detecting execution state changes between states such as "started", "stopped" and "suspended". However, such a monitoring mechanism is provided as part of what is essentially middleware for the agents. It can only make sure the agents appear to be still running and it is entirely limited to the semantics of the agents and the robustness of their software environment.

A known problem is so called 'emergent behaviour' in which unexpected patterns and properties arise. This is discussed for example in "Emergence as a Construct: History and Issues", published in Emergence: Complexity and Organization 1 at pages 49-72, by Jeffrey Goldstein in 1999. This might cause adaptive software in a decision making system to recommend unsafe acts.

A further requirement for a decision making system is that the decision should be repeatable. For example, small variations in input data should not produce large swings in behaviour, unless this results from a clear 'binary' shift in the contextual situation. Given essentially the same circumstances, the system ought to make the same or a similar decision.

According to a first aspect of the present invention, there is provided a safety management system for equipment having a safety monitoring and control system, the equipment being adapted to operate in a real-time environment, the safety management system comprising:
i) an input and an output;
ii) a non-deterministic processor adapted to receive monitoring data generated by the safety monitoring and control system and delivered to the safety management system via said input, to process the monitoring data in relation to one or more capabilities of the equipment, and to send control data, based on the processed monitoring data, for use by the safety monitoring and control system in controlling the equipment; and
iii) a deterministic processor for monitoring behaviour of the non-deterministic processor, for processing the control data sent by the non-deterministic processor and for sending control signals comprising control data to the output of the safety management system.

Embodiments of the invention find particular application in equipment adapted to operate autonomously.

The non-deterministic processor may comprise an input for receiving the monitoring data, a monitoring data processor for processing the monitoring data in relation to one or more capabilities of the equipment, and a control data output for sending control data, based on the processed monitoring data, for use by the control system in controlling the equipment.

The deterministic processor may comprise a behaviour monitor for monitoring behaviour of the non-deterministic processor, and a control data processor for receiving and processing the control data sent by the non-deterministic processor and for sending control signals to the output of the safety management system.

A deterministic processing system is a system having an initial state which, on receiving one or more input values, carries out a process whose outcome is entirely determined by the initial state and the input value(s). The system will always produce exactly the same result from the same initial state and input value(s). In a non-deterministic processing system, for any one combination of initial state and value(s), there may be more than one possible next state.

The deterministic processor may comprise timing equipment for monitoring time-critical behaviour of the non-deterministic processor in responding to received monitoring data. This allows it to detect behaviour of the non-deterministic processor, for example caused by non-convergence of an algorithm, that might jeopardise safety.

The deterministic processor may comprise a control data store and a safety data store, and is adapted to process the control data sent by the non-deterministic processor against safety data stored in the safety data store, the control data in the control signals sent to an output of the safety management system being selected from control data received from the non-deterministic processing system and/or control data stored in the control data store. The selection of the control data may be determined by said time-critical behaviour and/or the outcome of processing the control data sent by the non-deterministic processing system against safety data stored in the safety data store. For example, the non-deterministic processor might have found a value through an optimisation algorithm that is still in an unsafe range. In these circumstances, the deterministic processor can substitute control data from the control data store before sending a control signal.

The safety data store may for example be constructed for storing safety-related rules and safety data and the processing of the control data may be done by running a rules engine which uses the stored rules to identify control data that would be unsafe if used in sending a control signal to the control system.

Embodiments of the present invention in its first aspect can be used in automated equipment, such as unmanned vehicles, to give a non-deterministic safety management system whose behaviour is monitored by a deterministic safety management system. The non-deterministic system can deal with unpredictable incoming data that a deterministic processing system could not have been configured to deal with. The deterministic system can then apply boundaries to the behaviour of the non-deterministic system, for example in terms of either data or timing.

Preferably, the deterministic processor is connected between the input of the safety management system and the non-deterministic processor such that the non-deterministic processor receives the monitoring data only via the deterministic processor. The deterministic processor can then provide a form of intelligent interface to the non-deterministic processor, for example assessing incoming monitoring data for its suitability to be processed by the non-deterministic processor.

The control signals sent to the output of the safety management system could be designed for direct use in controlling the equipment, or could be advisory signal outputs for indirect use in controlling the equipment.

Aspects of control in a vehicle that the control signals might relate to include, for example, the following functions:
- Sense and avoid
- Route management
- Power management
- Health management, including prognostic health management ("PHM").

PHM systems take into account predictable changes, such as deterioration or failure in the future.

The deterministic processor preferably further comprises a monitoring data processor for processing the monitoring data generated by the safety monitoring and control system in relation to one or more capabilities of the equipment. Such an arrangement means that the deterministic processor is capable of responding to monitoring data relating to safety of the equipment without any activity by the non-deterministic processor. This allows the deterministic processor to issue control signals for example in the event of malfunction or failure of the non-deterministic processor.

An example of a control signal in such an event might simply identify a backup plan, or section of a plan, for use by the control system in place of future steps in a plan currently or recently being executed.

The deterministic and the non-deterministic processors are preferably supported by different middleware components. In particular, the deterministic processor should be enabled, in use, by middleware that is entirely independent of the non-deterministic processor or the middleware supporting the non-deterministic processor. This avoids problems arising in or associated with the non-deterministic processor affecting performance of the deterministic processor.

Although hardware might be shared, it is preferred that the deterministic and the non-deterministic processors are also supported by separate and independent operating systems. This gives the safety management system resilience against software problems, such as for example viral attack, arising in the non-deterministic processor or its supporting middleware or operating system.

The deterministic and the non-deterministic processors are preferably adapted to communicate with one another, in use, via an external interface such as an application programming interface. This maintains independent operation and supports resilience of the deterministic processor in the event of problems arising with the non-deterministic processor. It also facilitates interchangeability of one or both of the processors.

According to a second aspect of the present invention, there is provided a safety management system for equipment having a control system operating in a real-time environment, the safety management system comprising a deterministic processor and a non-deterministic processor, the deterministic processor having an input for receiving monitoring data in relation to the equipment and being adapted to pre-process received monitoring data for selective delivery to the non-deterministic processor, the processors each being adapted to produce control data for use by the control system, in accordance with processed monitoring data.

Embodiments of the invention in its second aspect allow the deterministic processor to assess whether the non-deterministic processor should receive monitoring signals for processing.

For example, the deterministic processor might assess whether there is sufficient time remaining in which the non-deterministic processor can be used. In this example, the deterministic processor might be adapted to pre-process received monitoring data for said selective delivery by:
a) determining a maximum response time for producing control data and a minimum processing time required by the non-deterministic processor to process the received monitoring data;
b) comparing the maximum and minimum times determined at step a); and
c) either delivering monitoring data to the non-deterministic processor for processing, or producing said control data, in dependence on the outcome of step b).

Preferably, the deterministic processor is adapted to repeat steps a) and b) after step c) to avoid a time over-run by the non-deterministic processor or to allow further refinement by the non-deterministic processor.

As in embodiments of the invention in its first aspect, the deterministic processor preferably comprises a behaviour monitor for monitoring behaviour of the non-deterministic processor, and a control data processor for receiving and processing the control data sent by the non-deterministic processor and for sending control signals to the control system. These features allow the deterministic processor to protect the equipment from unwanted, for example aberrant or belated, behaviour of the non-deterministic processor.

The deterministic processor may be connected in use to receive monitoring signals from more than one source and/or of more than one type. For example, it might receive monitoring signals from a diagnostic system for the equipment and from a context-monitoring system. The signals might for example concern faults arising or predicted in the equipment or changes in context such as speed, air pressure or obstacle location. These may be used in one or more combinations by the deterministic monitoring signal processor in determining the maximum time period allowable and/or the expected time period required.

It will be recognised that it is particularly the combinations of factors potentially involved, for instance real-time context and equipment health together with forward reasoning such as planning and prognostic health monitoring, that give the complexity that indicates use of a non-deterministic reasoning system.

According to a third aspect of the present invention, there is provided a method of managing equipment having a safety monitoring and control system operating in a real-time environment, the method comprising:
i) using a non-deterministic processor to receive safety monitoring data generated by the safety monitoring and control system, to process the safety monitoring data in relation to one or more capabilities of the equipment and to send control data, based on the processed safety monitoring data, for use by the control system in controlling the equipment; and
ii) using a deterministic processor to monitor behaviour of the non-deterministic processor, to receive and process the control data sent by the non-deterministic processor and to output control data for use by the safety monitoring and control system in controlling the equipment.

A method according to the invention in its third aspect may further comprise the step of using the deterministic processor to receive the safety monitoring data from the safety monitoring and control system and to pre-process it for selective delivery to the non-deterministic processor.

In embodiments of the invention, the deterministic processor can be used effectively to encapsulate the non-deterministic processor so that, in use in managing equipment, it only receives safety monitoring data, and only sends control data, via the deterministic processor.

It is to be understood that any feature described in relation to any one aspect or to any one embodiment of the invention may be used alone, or in combination with other features described, in relation to one or more other aspects or embodiments of the invention if appropriate.

As well as unmanned vehicles, embodiments of the invention might be used in automated and autonomous equipment in other situations, particularly industrial environments such as factories, power stations, railways and chemical plants for example.

A vehicle safety management system for use in controlling an unmanned, autonomous vehicle will now be described, by way of example only, with reference to the following figures in which:
Figure 1 shows diagrammatically a relationship between components and subsystems of the vehicle, capabilities of the vehicle and steps in an operational plan;
Figure 2 shows a functional block diagram of the vehicle safety management system in general layout, together with data flows arising in a decision-making process;
Figure 3 shows in block diagram a layered software architecture of the safety management system in relation to supporting software technologies;
Figure 4 shows in block diagram a breakdown of components of the safety management system;
Figure 5 shows, in functional block diagram, components of a working context for the safety management system of Figure 4 in use;
Figure 6 shows data flows between the safety management system and other components, both on-vehicle and off-vehicle, in use of the safety management system of Figure 4;
Figure 7 shows components of a rules engine for use in the safety management system of Figure 4;
Figure 8 shows watchdog processes used to track software agent state changes in use of the safety management system of Figure 4;
Figure 9 shows agent and watchdog state machines for use in the process of Figure 8;
Figure 10 shows a flow diagram of steps in a time management process for use in managing non-deterministic behaviour in the safety management system of Figure 4.

### Safety Monitoring and Control System for an Unmanned Flying Vehicle

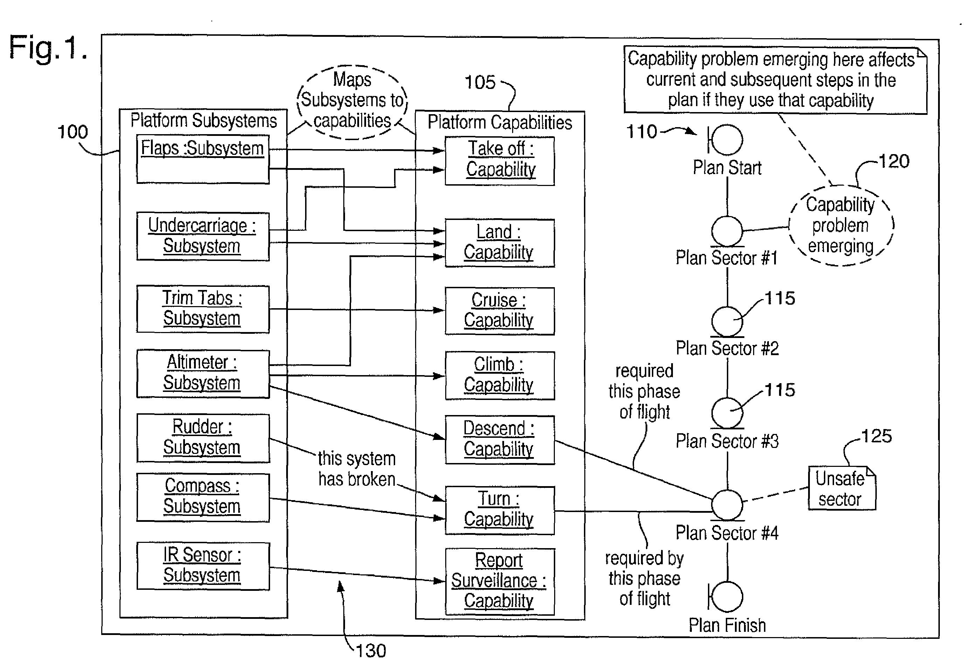

Referring to Figure 1, an embodiment of the invention is appropriate for use in a safety monitoring and control system for an unmanned flying vehicle. The vehicle has a series of equipment subsystems 100, listed in Figure 1 as flaps through to infrared sensor ("lR Sensor"). Each of these contributes to one or more capabilities 105 of the vehicle, the specific contributions being indicated on Figure 1 by connecting lines 130. For example, flaps and undercarriage contribute to the capabilities 105 take-off ("T/O") and "Land" but "Land" further requires the altimeter. The rudder and the compass both contribute to the capability 105 "Turn". The vehicle operates according to a plan 110 which comprises a sequential series of steps 115, each step (or "sector") using at least one capability 105. As shown, a sequential series of steps might each use one or more of the following capabilities 105:
- Take-off ("T/O")
- Climb
- Cruise
- Climb
- Report surveillance
- Turn
- Descend
- Land

External factors may be relevant to these steps, such as the turn after reporting surveillance may have to take place in an unsafe location, this being indicated on Figure 1 by an "Unsafe sector" flag 125.

It is known to use a safety monitoring and control system that detects problems, for instance that a monitored subsystem has a fault or there is a significant change in context, and responds to a detected problem by producing appropriate control signals. If a problem 120 arises with one of the capabilities 105 at a point in a part-accomplished plan, it will only affect the plan 110 if the capability 105 with the problem 120 is required at that point or subsequently. If the relevant capability is "T/O", the plan is not affected in the scenario shown in Figure 1 because T/O is only invoked in the first step of the plan and the problem 120 arises later. If the relevant capability 105 is "Report Surveillance" or "Descend", the plan is affected however. It might be best to abort the plan immediately if it is not going to be possible to report a surveillance exercise but to abort the plan at a later point if it is going to be possible to obtain a surveillance report but not to land the vehicle. These changes to the plan 110 require real-time decision-making.

A safety management system according to an embodiment of the invention can provide this real-time decision-making.

### Safety Decision System ("SDS") 325

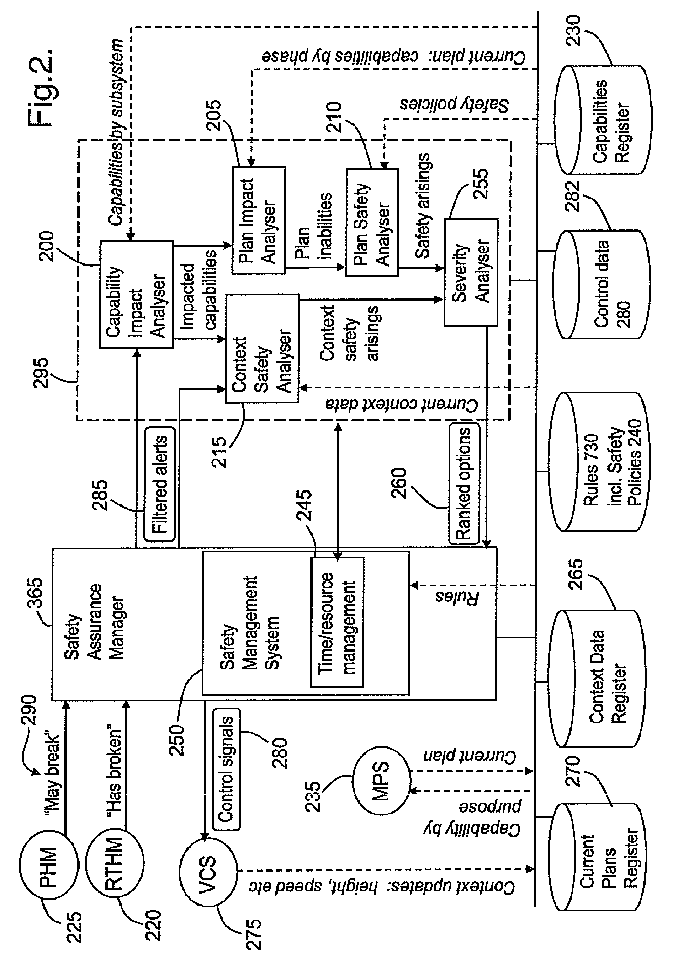

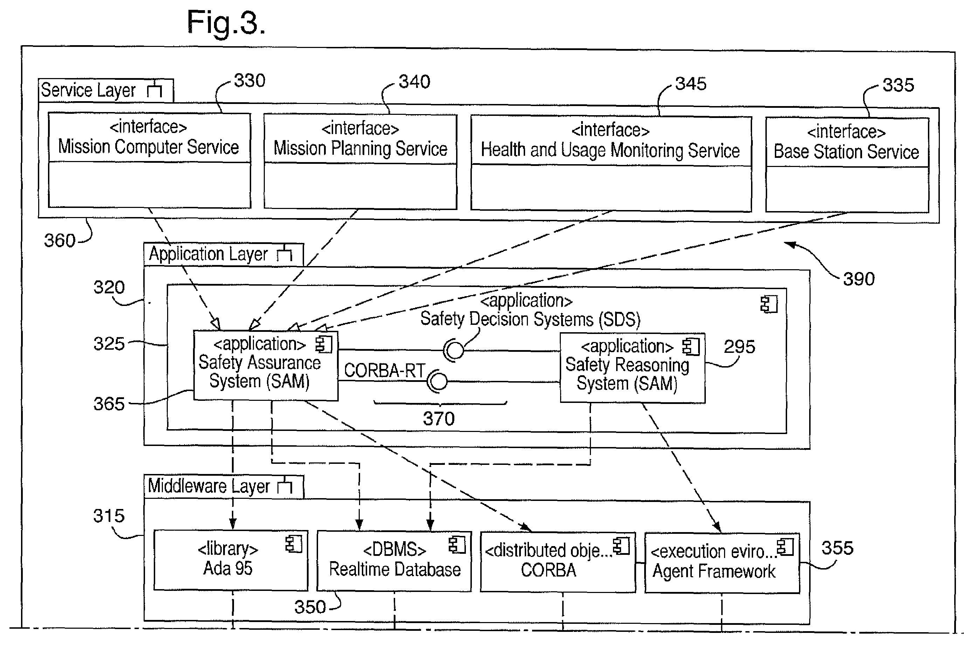

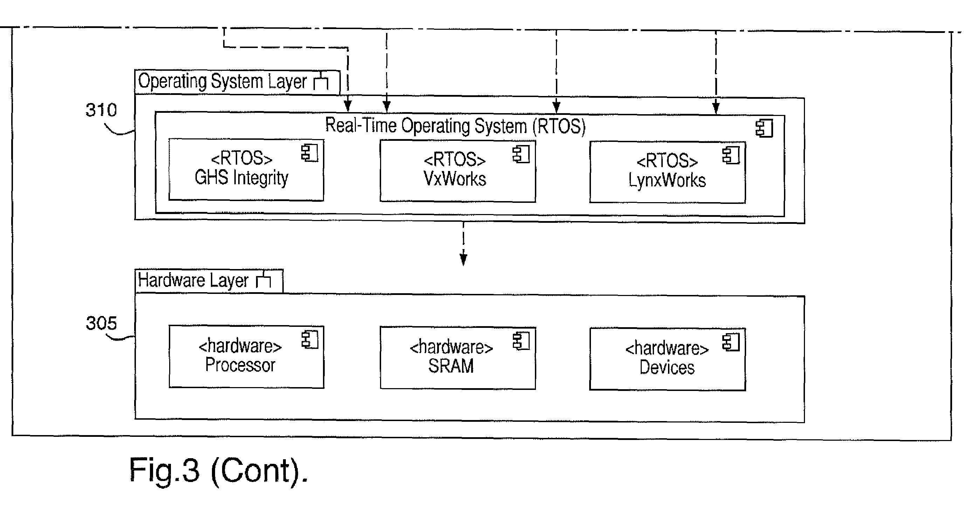

Referring to Figures 2 and 3, a safety management system to provide real-time decision-making for an unmanned flying vehicle is described below with reference to a safety decision system referred to as the SDS 325.

The SDS 325 provides two principal applications: a Safety Reasoning System ("SRS") 295 and a Safety Assurance Manager ("SAM") 365. The SRS 295 provides a non-deterministic processor, being based on software agent technology, and the SAM 365 provides a deterministic processor.

Key activities of the SDS 325 are to process incoming safety monitoring data produced as alerts 290 by the safety monitoring and control system, such as changes in system context and reported faults, so as to determine any changes which may have to be made to a mission plan. For example, it will be necessary to determine which capabilities (if any) of the vehicle have been compromised by a fault and when this will occur, regardless of whether the fault has already been detected by a real-time health monitoring ("RTHM") diagnostic system 220 or is predicted by a prognostic health monitoring ("PHM") system 225.

The SAM 365 provides a deterministic safety management system 250 together with supporting software such as communications capability. Importantly, as well as filtering incoming alert messages 290, reviewing ranked options 260 provided by the SRS 295 and issuing control signals 280 containing control data for use by the safety monitoring and control system, the SAM 365 also monitors the health and performance of the agents of the SRS 295.

This partitioning of the SDS 325 between the SRS 295 and the SAM 365 creates a virtual intelligent barrier, provided by the SAM 365 between the SRS 295 and the rest of the vehicle subsystems and the base station. This protects the vehicle subsystems and base station from non-deterministic behaviours exhibited by the SRS 295. All the recommendations output by the SRS 295 are tested against a set of safety policies 240. These policies 240 can be changed and then uploaded to the SDS 320 before the start of each mission and all changes to the safety policies 240 could be managed by appropriate authorities for the vehicle.

Another advantage of separating the SAM 365 from the SRS 295 is that it becomes a simpler process to verify and validate any safety measures employed.

The SDS 325 thus provides two separate software components, the deterministic SAM 365 and the non-deterministic SRS 295, which run in separate processes. The SRS 295, written in Java or similar software language, contains software agents supported by an agent framework 355. The SAM 365, written in Ada 95 with full static analysis etc, hosts monitoring and recovery services to ensure that the SRS 295 is still operating correctly. (Ada is a high level programming language originally designed by Cll Honeywell Bull under contract to the United States Department of Defense and now an international standard. The Ada 95 revision introduced support for financial and numerical systems and object-oriented programming.)

The independence of the SAM's monitoring and recovery services from the agents and their agent framework provides a safety critical advantage. In practice, the agents of the SRS 295 cannot communicate with the host platform in any way except via the SAM 365.

In Figure 2, a block diagram shows an outline decision-making process in the context of components of the vehicle safety management system for providing real-time decision-making. The decision-making process will be triggered by an incoming message 290 showing some kind of change. The incoming message will generally come from another on-board system which might be, as shown in Figure 2, a RTHM diagnostic system 220, a PHM system 225, a mission planning system 235 or a vehicle control system 275. These can each generate an event message 290 showing a change that might affect safety and therefore needs review. For example, an equipment subsystem 100 can generate an event message 290 "Has broken", or "May break", or there may have been a change in mission or context, such as a drop in height.

In practice, Figure 2 is limited, by way of example, to showing functionality for dealing with safety monitoring data comprising event messages 290 in the form of health alerts arising in the RTHM and PHM systems 220, 225 in relation to subsystems providing capabilities of the vehicle.

The event messages (or alerts) 290 are initially filtered by the deterministic safety management system 250 of the SAM 365 to ensure that they need to be analysed. In this way the event messages 290 are preprocessed by the SAM 365 for selective delivery to the SRS 295. For example, messages that relate to a problem already known and/or being analysed, not serious enough to warrant analysis in a current context, or spurious, may not need further analysis. If one or more messages requires analysis, the safety management system 250 checks whether there is time remaining in which the analysis can be done. Time allowing, the safety management system 250 transmits the alert messages 290 to the non-deterministic processing system, the SRS 295, for more detailed analysis. If time does not allow, the safety management system 250 is equipped to provide a response, such as a predetermined default response, to the alert messages 290.

The SRS 295 comprises a set of analysers for analysing filtered alerts 285 in terms of their impact on the vehicle capabilities 105 and on any plan 110 in progress. These analysers are:
- a capability impact analyser 200
- a plan impact analyser 205
- a plan safety analyser 210
- a context safety analyser 215
- a severity analyser 255

Once the impact is known, the severity of the situation can be assessed and options given for responding to an alert 285. The analysers 200, 205, 210, 215, 255 can call on data regarding the capabilities 105 of the vehicle and its current context, the nature and state of the plan 110 in progress and on preestablished safety policies 240. This data is maintained respectively in one or more data stores structured to provide for example a capability register 230, a safety policy store 240, a context data register 265, a current plans register 270 and a control data store 282. The data may have been entered before or during a mission and updated appropriately, for example by the mission planning system 235 and the vehicle control system 275.

The safety policies 240 might themselves contain safety data, such as minimum and maximum safe values in relation to a variable, or might refer to safety data stored separately in relation to a variable. Similarly, the control data store 282 may hold control values for use in control signals 280 or may hold control signals 280 per se.

Once the impact of an alert 285 has been assessed, the severity analyser 255 can issue one or more options 260, ranked according to the severity of the situation, to the safety management system 250 of the SAM 365.

The SRS 295 may be of generally known type, based on software agent technology, the analysers discussed above being provided by respective software agents. Overall, in the embodiment described here, it operates as described below.

When a filtered alert 285 is received in respect of a failing subsystem 100 by the SRS 295, the capability impact analyser 200 maps the failing subsystem 100 to the capabilities that 105 will be impacted. Impacted capabilities may affect current or future steps in a mission plan and will also be closely related to context. Impacted capabilities are therefore fed to the plan impact analyser 205 and the context safety analyser 215.

The plan impact analyser 205 identifies current or future plan inabilities, with reference to the current plans register 270, and these are forwarded to the plan safety analyser 210 to assess the safety implications in light of preestablished safety policies 240.

The context safety analyser 215 reviews the affected capabilities against current context data 265 such as height and speed. The current context might indicate more urgent action needs to be taken than the mission plan dictates. An example would be loss of power in a subsystem that would lead to stalling.

The results of processing by the plan safety analyser 210 and the context safety analyser 215 are reviewed by a severity analyser 255 to arrive at an assessment of the problem which gives a set of ranked options 260 for action. These might be for example:
- Continue current plan (low severity)
- Change current plan (medium severity)
- Abandon current plan (high severity)

These are given as an example only. There may be fewer, or many more, options in the ranked set 260, depending on the circumstances; say perhaps a dozen or more. At this point, the SRS 295 returns the ranked options 260 to the deterministic safety management system 250 of the SAM 365 before any action is taken, for example sending control signals 280 to the vehicle control system 275 to implement a change in plan.

The analysers 200, 205, 210, 215 thus determine the impact of a filtered alert 285, assign a level of severity (low, medium or high), decide whether the plan 110 in progress should be continued, changed or abandoned and extract a set of ranked options for evaluation by the deterministic safety management system 250 of the SAM 365.

The deterministic safety management system 250 reviews the ranked options and may amend or replace them before issuing control signals 280 to the vehicle control system 275.

The ranked options 260 and the control signals 280 both represent or contain control data for use by the safety monitoring and control system of the vehicle. However, it will be understood that the control data might be expressed as a code, requiring interpretation by use of a lookup table or the like before direct use in controlling the vehicle. An example is control data that means "Continue current plan". This could be represented as a simple number for example.

Referring additionally to Figure 1, in an example, an event message might arise on detection of a rudder problem 120 in sector 1 of the mission plan. This will not cause an actual issue in terms of capabilities until sector 4 when the 'rudder' subsystem is required for a 'turn' capability. So the detected problem 120 in this case, as analysed by the plan impact analyser 205, would present a prognostic horizon of at least two mission plan sectors which provides a window of time for dynamic re-planning. However, the context safety analyser 215 may present a far smaller window based on current context data. For example, a detected obstacle may require the turn capability within sector 1 of the mission plan. This will affect the outcome of review by the severity analyser 255 and thus the ranked options 260.

### System Context

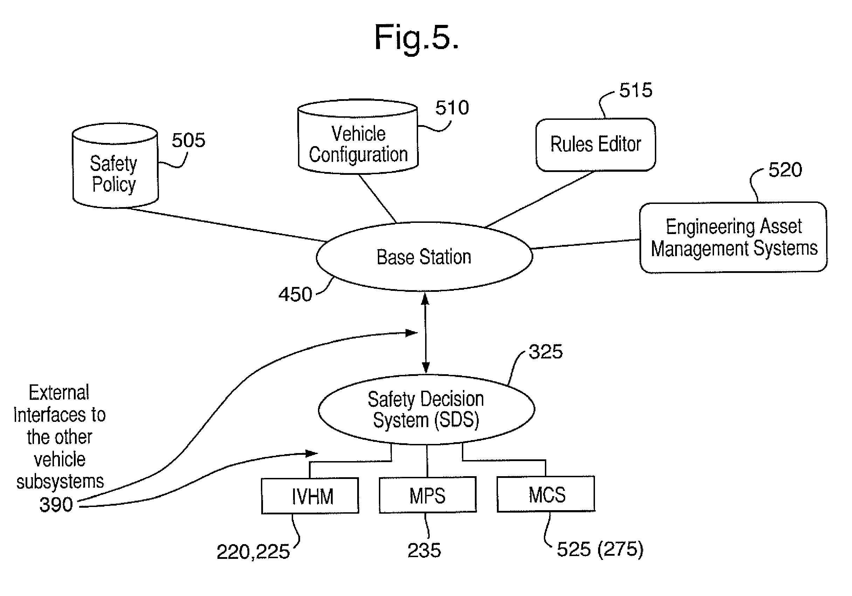

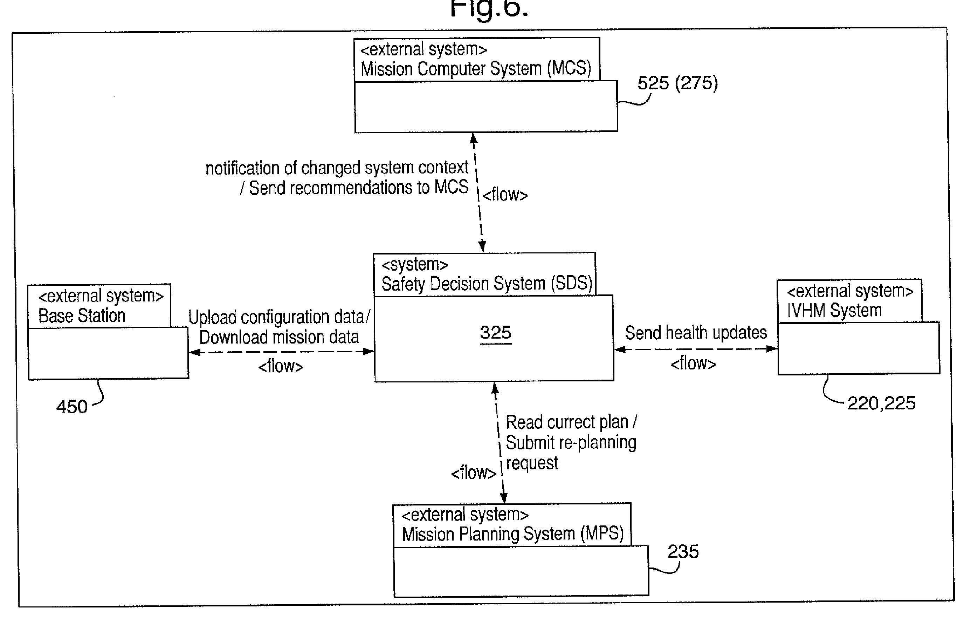

Referring to Figures 3, 5 and 6, for management purposes the SDS 325 of the application layer 320 sits in a wider context between a base station 450 for the vehicle and external interfaces 330, 340, 345 of the service layer 360 to other vehicle subsystems 220, 225, 235, 525 (incorporating 275).

The SDS 325 is connected by a communication link (e.g. 1553, Serial, Ethernet and CAN-bus) to the other vehicle subsystems 220, 225, 235, 525 (275). These are:
Mission Planning System (MPS 235): provides mission planning/replanning functionality. Data flows between the SDS 325 and the MPS 235 are "Read current plan", "Submit re-planning request".
Integrated Vehicle Health Management (IVHM 220, 225) System: provides health management functionality, reporting diagnostic and prognostics data outputs. Data flows to the SDS 325 are "Send health updates".
Mission Computer System (MCS 525): provides command and control, including the vehicle control system 275, situational awareness and mission plan execution functions. The MCS 525 can for example execute plans generated from the on-board MPS 235. Data flows between the SDS 325 and the MCS 525 are "Notification of changed system context", "Send recommendations to MCS".

The base station 450 provides tools for installation, configuration and maintenance of both the vehicle and the SDS 325, such as a safety policy data store 505, a vehicle configuration data store 510, a rules editor 515 and an engineering asset management system 520. It is responsible for the management of the SDS configuration data (e.g. vehicle structure, capabilities, safety rules) and provides a mechanism to upload this data prior to a mission. The base station 450 also provides the facilities to set authorisation levels and to download data from the on-board SDS 325 for post-mission debriefs and replays.

The base station 450 can provide a vital validation tool, and should at a minimum provide the following functions:
a) to construct a scenario or mission to execute
b) to set the level of autonomy (PACT levels)
c) to initiate and terminate the mission execution,
d) monitor the progress of the mission
e) if necessary, take active control of the vehicle to provide a fail-safe mechanism

PACT levels are referred to above. PACT stands for "Pilot Authority and Control of Tasks" and is a taxonomy developed by the Defence Evaluation Research Agency ("DERA") in the United Kingdom within the Ministry of Defence's "COGPIT" (Cognitive Cockpit) programme.

Data flows between the base station 450 and the SDS 325 are "Upload configuration data", "Download mission data".

The base station 450 can also receive information regarding all on-board detected anomalies (via a data-link) so correct maintenance actions could be pre-planned, for example to identify the correct maintenance tasks, trades/skills and tools required. This information could also include location information.

The other vehicle subsystems 220, 225, 235, 525 (275) give the SDS 325 up to date system information, such as vehicle health, current segment of the mission being executed, indicated fuel remaining, and external factors such as indicated altitude, pressure altitude and the like. These subsystems also apply control data or control signals output by the SDS 325 in controlling the vehicle and, together with the SDS 325, provide an on-board portion of the vehicle's safety monitoring and control system.

Key elements of the system context are thus received in terms of data from on-board sensors and effectors, and from ground-based components concerning for example command and control functions. This contextual data represents a difficult problem to process because:
- it is so dynamic
- it depends heavily on situational awareness and quick decisions
- multiple sensor information must be tracked
- external communication must be performed
- of close proximity to external obstacles

In more detail, the data flows to and from the SDS 325 have the following content and purposes:
"Upload configuration data": to load into the SDS 325 the correct set of safety rules and vehicle configuration (structure, payload, etc) for use during a mission.
"Download mission data": to download data collected by the SDS 325 for post-mission debriefs and replays at the base station 450.
"Read current plan": to access the current mission plan from the MPS 235 to determine which sector of the plan has been compromised for example as a result of a fault reported by the HUMS 220, 225.
"Submit re-planning request": to inform the MPS 235 that a re-plan is required, for example as a direct consequence of a detected fault by HUMS 220, 225, and to supply the results of an initial impact assessment.
"Send health updates": to obtain updates on diagnostic and prognostic health status of the vehicle's fitted components from HUMS 220, 225
"Notification of changed system context": to report changes in the vehicle height, speed and direction, for example as a consequence of identifying obstacles on a current flight path or changes in external wind speed from the MCS 525.
"Send recommendations to MCS": to suggest a new course of action for example as a direct consequence of a detected fault. Will take the form of a new mission plan submitted to the MCS 525 to apply via the vehicle control system 275.

### Safety Assurance Manager ("SAM") 365

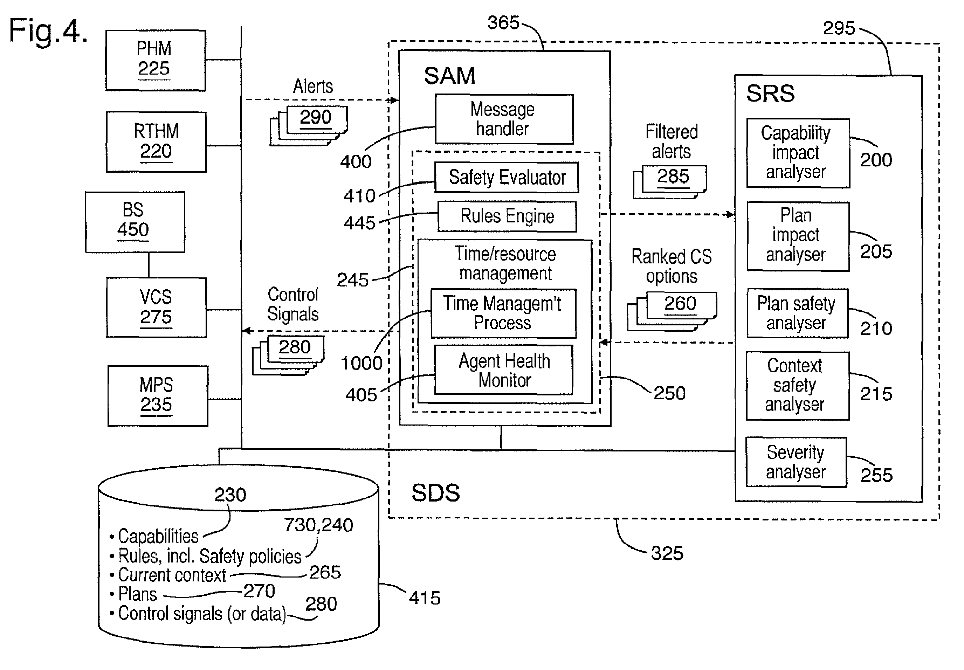

Referring to Figures 2 and 4, the SAM 365 comprises a set of four primary software processing components which have the following roles-MessageHandler 400: deals with all incoming and outgoing communications between the SDS 325 and other on-board subsystems, and with the base station, thus providing the only input and output to the SDS 325

SafetyEvaluator 410: receives alerts and ranked options from the MessageHandler 400 and the AgentHealthMonitor 405, runs the RulesEngine 445 as necessary

Time/ResourceManager 245: runs and monitors the health and behaviour of the software agents of the SRS 295

RulesEngine 445: used by the SafetyEvaluator 410 to maintain safety of the vehicle in general, including by filtering received alerts 290 and validating all recommendations 260 of the SRS 295 against the safety policies 240

The Time/ResourceManager 245, the SafetyEvaluator 410 and the RulesEngine 445 together provide the main part of the deterministic safety management system 250 of the SAM 365, mentioned above. The RulesEngine 445 may have access to a wide range of rules 730 in use but safety-related decisions will generally be made with reference to the safety policies 240 representing safety-specific rules 730.

A major role of the SAM 365 is to maintain safety of the vehicle in general, and particularly in circumstances that the non-deterministic SRS 295 cannot deal with, for one reason or another. It acts as an intelligent watchdog which tracks and coordinates all operations. The SAM 365 receives alerts 290, either deals with them directly or runs the SRS 295 in relation to them, monitors both health and performance of the agents of the SRS 295 and validates all the recommendations made by the SRS 295. It performs these safety roles by use of the safety evaluator 410, its rules engine 445 and stored safety policies 240.

The SAM 365 can be used to maintain safety in relation to any scenario which can be expressed as a rule available to the rules engine 445. These rules, the safety-specific rules 730 stored as safety policies 240, are available to the SAM 365 as "read only" and can include for example required response times or platform domain specific physical properties. The SAM 365 will monitor the agents and agent framework of the SRS 295 to ensure that the SRS 295 is still operating and responds in a timely manner. Also the SAM 365 monitors behaviours which could result in damage to human life, collateral damage, third-party damage or damage to the vehicle and mission. The SAM 365 is particularly designed to prevent, if the artificial intelligence element self-organises (the non-deterministic SRS 295 and its supporting technology), that the outcome does not propagate into the rest of the system.

In operation the SAM 365 receives inputs from the service layer 360 via its communications links 390 as well as from the SRS 295. Importantly, there is a single set of communications links 390 from the SDS 325 to other systems, all of these being connected via the SAM 365. The SAM 365 handles external messages received from other subsystems, on-board or otherwise, processing them and passing them as necessary to the SRS 295. As mentioned above, the safety management system 250 of the SAM 365 also validates all recommendations from the SRS 295 before transmitting information or commands to any computer or device controlling the vehicle, such as to the vehicle control system 275. This avoids a situation for example where one or more agents of the SRS 295 has followed an avenue of reasoning that's against a rule or safety policy 240.

When the SAM 365 receives external alert messages 290 from other subsystems, the safety evaluator 410 reviews them, using the rules engine 445 and the safety policies 240. The review is intended to detect messages 290 which are not appropriate for the SRS 295 to process. These will include for example spurious alert messages and messages requiring a response time that the SRS 295 cannot provide. An example of a spurious alert would be a message arising as a secondary effect of some other system activity such as power switching. Examples of rule types that might apply in order to weed out spurious alerts are given below.

Simple: If "302-080 ENG 1 PRSOV FAIL" Occurs and Clears prior to "APUON = On" then ignore, else evaluate

Moderate: If "931-041ACOUS1 PEP L" AND/OR "931-042ACOUS1 PEP R" AND/OR "931-046ACOUS2 PEP L" AND/OR "931-047ACOUS2 PEP R" Occurs and Clears prior to "ENGINE START " then ignore, else evaluate

Threshold: If "HYGFB" = OFF and "HYPRB" < 3000 psi, then expect message "292-005 BLU AC HYD PUMP 1 FAIL" followed "292-004 BLU AC HYD PUMP 2 FAIL " . Ignore else evaluate

The safety evaluator 410 thus provides a monitoring data processor in the SAM 365 which filters external alert messages 290 containing monitoring data before running one or more agents of the SRS 295. If a problem exists in the SRS 295, this monitoring data processor is also capable of providing a response to a genuine alert message 290 independently of the SRS 295, such as by selecting a default control signal.

In order to detect spurious alerts 290, the SAM 365 will run a rule that can correlate current data with the alert. In many cases, an alert 290 will be corroborated by other alerts or by current context data. For example, if a fuel tank of a vehicle is contaminated, it may give rise to an alert via the real time health monitor 220 which could be corroborated by an alert from the prognostic health monitor 225 based on a change in engine behaviour. An alert relating to a blocked fuel filter on the other hand is likely to be corroborated by a change in speed or height of the vehicle.

Recent and/or unresolved alerts are stored, for example in the context data register 265, where they can be read by the safety evaluator 410 for this purpose. The system needs to know what alerts are present, which are currently active and processed and those which are still to be assessed. An incoming message may trigger an alert as active, but a later incoming message may be to inform that the alert has cleared (for example it was a transient). However, whilst the alert was flagged as active the software does not need to perform extra safety evaluation, as this processing would have been done upon receipt of the original triggering message.

When the SAM 365 receives one or more recommendations, or ranked control signal options 260, from the SRS 295, the safety evaluator 410 also reviews these, again using the rules engine 445 and the safety policies 240. The review validates the output of the SRS 295 in order for instance to detect malfunction in the SRS 295 or to apply an overriding safety policy. The safety evaluator 410 in this respect thus provides a control data processor in the SAM 365. Again, if a problem is detected in the ranked options 260, this control data processor is capable of providing a control signal output 280 independently of the SRS 295, such as by selecting a default control signal.

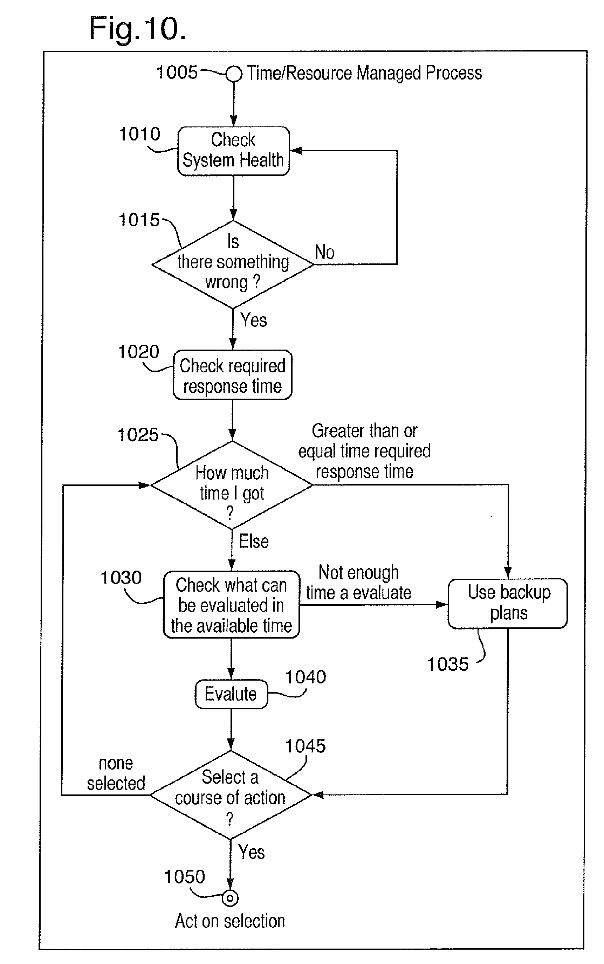

The SAM 365 also looks for emergent behaviour of the agents of the SRS 295 which might result in critical failures, such as non-convergence of decision-making algorithms meaning that a recommendation will be too late or unavailable. In order to detect messages requiring a response time that the SRS 295 cannot provide, the SAM 365 runs a time/resource management process which is further described below with reference to Figure 10.

An important role of the SAM 365 is to run and monitor the health of the software agents of the SRS 295. For these purposes, the SAM 365 has timing equipment in the form of the Time/ResourceManager 245 which provides two at least partly time-based functions by means of the time management process 1000 described below in relation to Figure 10 and an AgentHealthMontior 405. The time management process 1000 is concerned with whether or not to run the agents of the SRS 295 in a particular set of circumstances. The AgentHealthMonitor 405, as its name suggests, provides a behaviour monitor in the SAM 365 which is concerned with whether the agents are functioning correctly. For example, they might start to toggle or loop. The AgentHealthMonitor 405 performs periodic built-in tests such as CRC checks over the executing software-agents in the SRS 295, checking random access memory ("RAM") and any other tests and checks required by a relevant safety-critical system. The SAM 365 could restart the whole SRS 295 if required, and can recover from fatal error conditions by restoring the system to the last known checkpoint (using journaling).

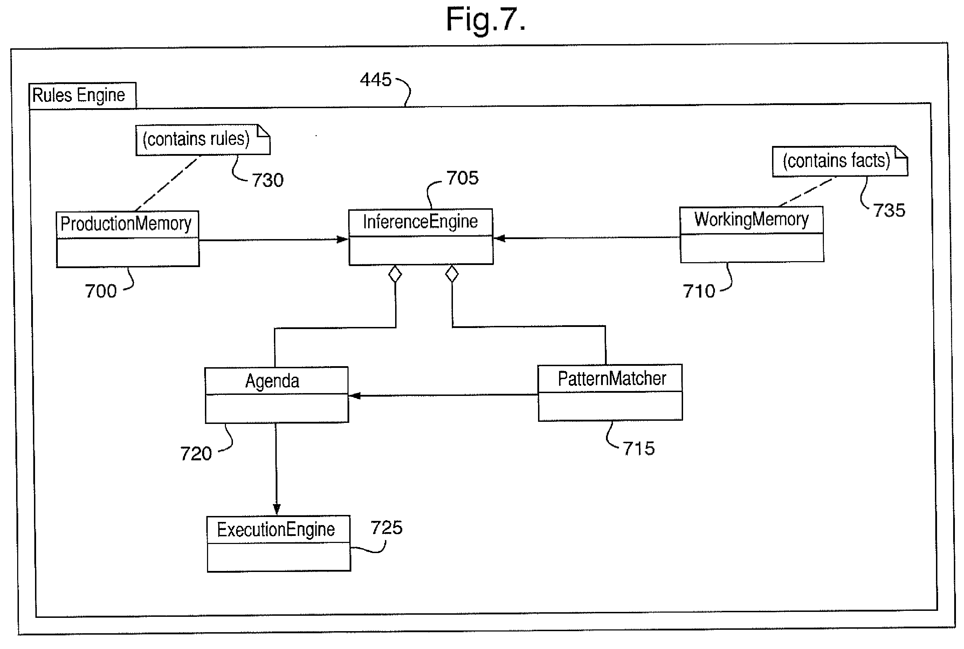

Referring to Figure 7, the rules engine 445 is of known type and provides a business logic framework which can be used by a Systems Design Authority (DA) to create and execute complex safety-based rules by exploiting concepts widely used in enterprise-level business Information Systems (IS) for creating business logic rules. It is a forward chaining rules engine, with its basic architecture following the structure of a classical expert system. It comprises an inference engine 705, a pattern matcher 715, an execution engine 725 and an agenda 720 and it has a production memory 700 which holds rules 730 and a working memory 710 which holds facts 735.

Forward chaining is a method for executing rules that is data driven, checking the "lf' part of a rule first (for rules 730 of the form "if xxx then yyy"). Actions are triggered when conditions are met.

The components of the rules engine 445 can be further described as follows:
Inference Engine 705:
   - controls overall execution of rules
   - controls whole process of applying rules 730 to the working memory 710 to obtain outputs of system
   - searches through the rules 730
   - decides which rules 730 to fire and when
Pattern Matcher 715:
   - decides which rules apply, given current contents of working memory 710
   - searches through combinations of facts 735 for those combinations that satisfy the rules 730
Agenda 720:
   - holds rules 730 that could potentially fire
   - responsible for conflict resolution
Execution Engine 725:
   - fires the rules 730
Production Memory 700:
   - stores rules 730 as strings of text or in compiled form, in an external or an integrated database
   - rearranges the premises or conclusions of a rule for automatic execution
Working Memory 710:
   - stores facts 735

The inference engine 705 uses the pattern matcher 715 to match facts 735 against production rules 730 to infer conclusions which result in actions. The rules 730 in embodiments of the present invention will generally comprise the safety policies 240. The facts 735 are data contained or derived from received event messages (or alerts) 290 or stored in data maintained in the data stores providing the capability register 230, safety policy store 240, context data register 265, current plans register 270 and control data store 282.

This known pattern matching process can be based on known algorithms such as the "Rete" algorithm, published under the title "Rete: a Fast Algorithm for the Many Pattern/Many Object Pattern Match Problem" in Artificial Intelligence, by Charles Forgy in 1982, pages 17-37. The Rete algorithm evaluates a declarative predicate against a changing set of rules in real-time and uses a progressive relational join to update a view of matching rows. As rows are added to any table, they are evaluated against the predicate and mapped into or out of the matching view.

The rules 730 are stored in the production memory 700 and the facts 735 are asserted into the working memory 710 where they may then be modified or retracted.

The inference engine 705 controls the entire process of applying the rules 730 to the working memory facts 735 and any modification of working memory 710 (assert, modification, retract of a fact) can result in a rule(s) activation, for example the condition part of the rule becomes true. The activated rules are ordered in the agenda 720, a list of rules that could potentially fire. Since firing a rule may have the consequence of manipulating knowledge, the order of rule firing is important. Different end-results may occur based upon different firing order.

It is possible that one fact could activate two or many production rules 730 and these rules are said to be in 'conflict' and will form a conflict set of rules. The conflict set is ordered to form the agenda 720. The agenda 720 maintains a list of activated rules to be fired and also a list of activated rules scheduled ("Temporal Rules") to be executed, dictated by the duration setting of that rule. Applying an order to the activations provides a conflict resolution strategy. The agenda 720 manages the execution order of these activated rules using different conflict resolution strategies (for example salience, last in - first out ("LIFO"), and the like).

### Agent Management by the Sam 365

The SAM 365 monitors the health and performance of the SRS agents, particularly during a decision making process. For example, as well as monitoring error rates and progress, it will also detect if the agents, working normally, are taking too long to reach convergence. To perform its monitoring functions, the SAM 365 may receive any one or more of the following inputs:
- Watchdog timeouts
- Software error assertions
- Hardware faults identified
- Data corruptions detected (using Checksums, CRCs, etc)
- Continuous/periodic Built in Tests (BIT)
- Data from the agents of the SRS 295, such as impacted capabilities and plan inabilities
- Recommendations from the SRS 295
- Messages received from other on-board subsystems

The SAM 365 manages agents contained in the SRS 295 by instructing them to perform any of the following operations:
- Suspend agent
- Terminate agent
- Create agent
- Resume agent execution
- Invoke agent
- Execute agent
- Resource management tasks, such as "return data"

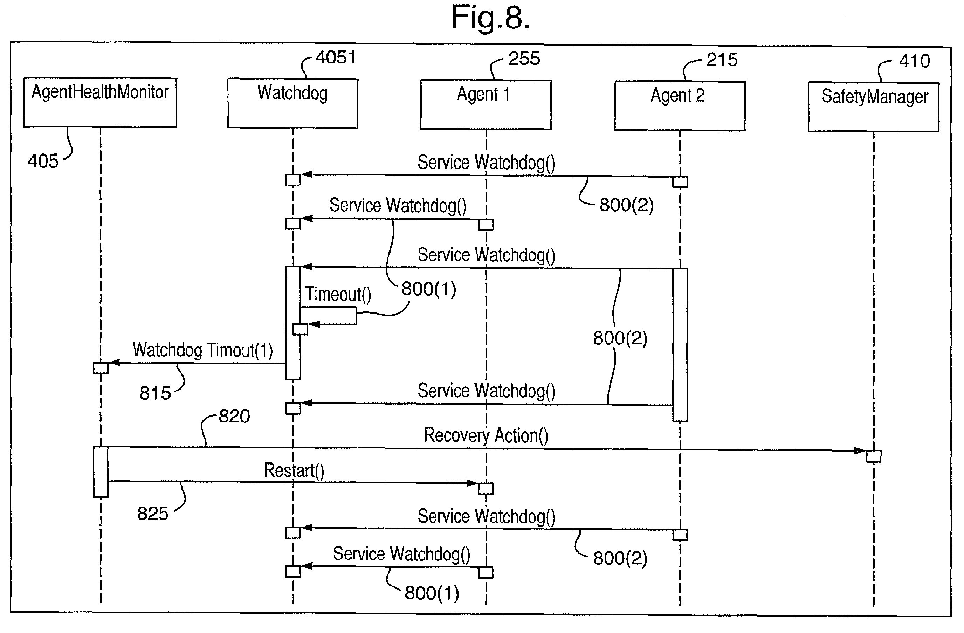

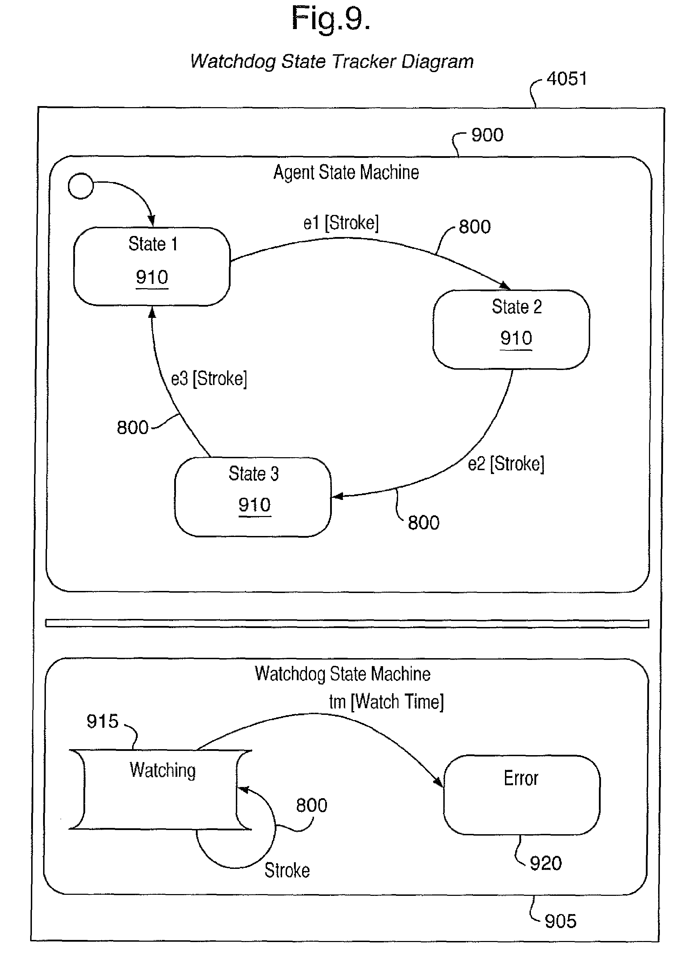

Referring to Figures 8 and 9, monitoring the health of the SRS agents can be done for example by using timing equipment comprising a watchdog process.

Figure 8 shows a sequence of interactions between the SAM 365 and the SRS 295 in monitoring agent health of the SRS 295 by the SAM 365. In providing a high-reliability and safety-critical system, it is necessary to check the responsiveness of the software-agents deployed in the SRS component continuously. For example, if state transitions stop occurring, it is an indication of missed events or a fault and the software-agent may need to be re-started. In some cases the SDS 325 should enter into a fail-safe or recovery state.

The agent health monitor 405 includes a watchdog processor 4051 which runs a watchdog service. Each monitored agent 420, 425 (only two shown, designated Agent 1 and Agent 2) of the SRS 295 incorporates a "stroke" process of known type. The agents 420, 425 are registered with the agent health monitor 405 and each registered agent sends a stroke signal 800(1), 800(2) to the watchdog processor 4051, for example periodically ("heartbeat") and/or each time the agent changes state. States are execution states and might include for example "not started", "running", "expired", "stopped" and "suspended". The watchdog processor 4051 expects to receive stroke signals 800(1), 800(2) at predictable times from each registered agent 420, 245. If stroke signals are missed from any one agent, the watchdog processor 4051 times out and reports to the AgentHealthMonitor 405.

In Figure 8, the watchdog processor 4051 detects non-receipt of a stroke signal from "Agent 1" 420 by means of a timeout 805 which creates a timeout event 810 and triggers a timeout report 815 to the AgentHealthMonitor 405, identifying the agent concerned. The watchdog processor 4051 continues to receive stroke signals 800(2) from "Agent 2" 425.

The timeout report 815 to the AgentHealthMonitor 405 is processed according to the identity of the agent concerned and a recovery action report 820 sent to the SafetyEvaluator 410 of the SAM 365. The AgentHealthMonitor 405 also sends a restart command 825 to the identified agent 420 which is successful and "Agent 1" 420 starts once more to send stroke signals 800(1).

Referring to Figure 9, the state transition monitoring described above could be constructed at the watchdog processor 4051 as follows. The processor 4051 maintains a view of a monitored agent's state transitions 900 and of its own state transitions 905. The agent, once running, has three available states 910 which it moves through with issue of stroke signals 800. The watchdog processor 4051 has a "Watching" state 915 which is retriggered by receipt of a stroke 800, setting a "WatchTime" interval. If a stroke signal 800 is missed after a "WatchTime" interval, the watchdog processor 4051 moves to an error state 810.

As well as monitoring that state transitions occur, it may be preferable to monitor the order of the transitions to ensure that repeated execution of a single block of code cannot be misinterpreted as responsiveness.

The frequencies at which running agents would be heartbeat pulsed or timeout checked, as described above, would be configurable on a platform by platform basis. The agents will start work when a problem has been detected and then all active agents will be monitored to ensure that each agent is progressing in order that the required system response time will be met.

Referring to Figures 2 and 10, monitoring the behaviour of the SRS agents during a decision making process, so as to detect problems with the non-deterministic behaviours of the SRS 295 such as non-convergence, can be done by using a time management process 1000 of the AgentHealthMonitor 405, in addition to the watchdog process described above. This might be applied for example in monitoring the context safety analyser 215 and the plan safety analyser 210. Other agents of the SRS 295 might also be time monitored in this way but in general have simpler tasks, such as mapping faults to capabilities and plan sectors, and don't necessarily have to be able to run non-deterministic algorithms on complex and/or unpredictable data.

The time management process 1000 is ready to run at any time the SRS 295 is in use. Since all communications come in to the SRS 295 via the SAM 365, the AgentHealthMonitor process 405 of the SAM 365 can also receive inputs destined for the SRS 295 and will thus receive fault messages from the HUMS interface 345.

When a fault message is received, two things will happen: the capability impact analyser 200 and the plan impact analyser 205 of the SRS 295 will immediately identify impacted capabilities and any consequent inabilities in the current plan and the time management process 1000 of the SAM 365 will run to ensure that the SRS 295 can deliver options for dealing with the fault in a timely way. In particular, the process 1000 is intended to monitor the progress of the context safety analyser 215 and the plan safety analyser 210 which are the elements of the SRS 295 which will undertake non-deterministic reasoning with regard to a fault arising in a current context. However, the process 1000 necessarily monitors all agent activity of the SRS 295.

For each fault arising, to be analysed by the SRS 295, an instance of the time management process 1000 will run. The steps of the time management process 1000 are as follows:
STEP 1005: start, triggered by the initiation of the SRS 295
STEP 1010: "Check System Health." This step checks (by polling) whether a fault has been reported via the HUMS interface 345.
STEP 1015: decision point - "ls there something wrong?" If a fault has not been reported, return to STEP 1010. If a fault has been reported, move to STEP 1020.
STEP 1020: "Check required response time." The required response time is the time by which action would have to be taken to respond to a fault. It is determined for example by the time left before entering an unsafe plan sector 125 (See Figure 1 and associated description) or the time left to a point in the mission plan where a backup plan needs to be implemented. The information is available from the plan impact analyser 205 with reference to the current plans register 270. Once the required response time has been obtained, move to STEP 1025.
STEP 1025: decision point _ "Check minimum evaluation time." In order to deal with the fault, the context safety analyser 215 and/or the plan safety analyser 210 will be required to process the fault and deliver a response within the required response time. There will be a minimum time required by the context safety analyser 215 and/or the plan safety analyser 210 to run an evaluation process in response to a fault. This minimum evaluation time is now assessed by use of the rules engine 445 with reference to rules 730. Values for estimating the minimum evaluation time might be loaded against the nature of the relevant fault in an approximation table. A safety policy 240 will take into account for example the nature and progress of a current mission plan. If the required response time calculated at STEP 1020 is less than the minimum evaluation time required by the context safety analyser 215 and/or the plan safety analyser 210, move to STEP 1035. Otherwise move to STEP 1030.
STEP 1030: "Check what can be evaluated in the time left." The context safety analyser 215 and/or the plan safety analyser 210 will process a fault against a number of factors. This step looks at the possible size of the search space and the complexity of the problem to choose an evaluation process for the SRS 295 to run in whatever time remains before the required response time. Again, the decision can be made by use of the rules engine 445 and might use a simple rule based on a single parameter or the agents 210, 215 might have been monitored in previous evaluations in order to provide data to the SAM 365 for use in this step. Values for estimating the evaluation time required might be based for example on historical data for the same or similar fault scenarios. The first time that the time management process 1000 reaches this step, there are likely to be several factors available for review. However, STEP 1030 is in a loop of the time management process 1000. If no course of action has been selected after an evaluation process has already been run by the analysers, this step may be returned to. There may be no remaining factors that can be taken into account or the only remaining factors might take too long to evaluate in the light of the required response time. If either of those is the case, move to STEP 1035. Otherwise, move to STEP 1040.
STEP 1035: "Use backup plans." Access a set of pre-determined plans that might deal with the detected fault. This offers a pre-configured "failsafe", or default, manner of dealing with the fault if it has not been possible to generate ranked options using real time data. Move to STEP 1045.
STEP 1040: "Evaluate." Run the evaluation process selected at STEP 1030. This will have been based on the time and nature of the fault in combination with the scheduling and prognostic horizons. Move to STEP 1045.
STEP 1045: "Check for ranked options." At this point, the SRS 295 may have given one or more recommended options as a result of STEP 1040. The time management process 1000 looks for such a result at STEP 1045. If there is no recommended option, return to STEP 1025, in which case the next most likely outcome is STEP 1035; the use of a backup plan. If there is one or more recommended option, this should be delivered to the SAM 365 for validation against the safety policies 240. Move to STEP 1050.
STEP 1050: "Act on selection." The time management process 1000 terminates and the SAM 365 validates the ranked options offered by the SRS 295 or reverts to a backup plan. The SAM 365 will then deliver an appropriate instruction (control signal), for example to the vehicle control system 275 or to the mission planning system 235, based on that selection.

Example options that the SRS 295 or the backup plans might deliver will be specific to the domain. Hence an aircraft could (in order of preference) continue mission but execute to a different plan to avoid use of a defective capability, abort its mission and return to base, land immediately at the nearest airfield, land immediately anywhere, parachute to ground or crash land away from a built up area. Similar options would exist for a land vehicle, such as continue but at lower speed, drive back to base, drive to nearby recovery point, move off-road and await recovery, or stop immediately. A different type of option is to carry out dynamic reconfiguration of the vehicle's systems or subsystems.

It might be noted that STEP 1025 can be carried out more than once in a fault process. In practice, it may be preferred to set a minimum time for repeating STEP 1025 in one fault process, which minimum time is designed to allow the SRS 295 to produce one or more ranked options in normal circumstances.

Overall, the SAM 365 ensures that the SRS 295 is still operating correctly and in the case of a fatal error the recovery procedure would be to initiate a restart of the affected SDS component. If the failure affects all of the SDS components then a restart of the whole SDS 325 would be required. The start-up times for each component would be known in advance and if the computed restart time is greater than any required response time then the SAM 365 would message the mission computer 525 to instigate a disaster recovery plan based on known system health and perceived damage level such as impact to human, collateral, vehicle and finally mission: continue mission unchanged; return to base; go to alternative base; land immediately; or controlled stop.

### Supporting Technology

Referring to Figure 3, the software providing the outline decision-making process described above is supported by a software stack 300 providing various connected entities and based on software agent technology. The software stack 300 comprises layers which can be ordered hierarchically in known manner from the most abstract, the service layer 360 (closest to the problem domain), down to the most concrete, the hardware abstraction layer 305 (closest to the underlying hardware). It should be noted that these logical layers are an effective way to represent the design. However, the actual implementation could be different, for example ordered as a series of vertical slices.

An application layer 320 of the software stack supports a safety decision system ("SDS") 325 which provides both the deterministic safety management system 250 and the SRS 295 of Figure 2. These communicate with one another only via an applications programming interface ("API") 370, defined in an Interface Definition Language ("IDL"), and using for example the known, real time, Common Object Request Broker Architecture ("CORBA RT") middleware.

Each layer of the software stack 300 is as follows:
Service layer 360: provides generic interfaces 330, 335, 340, 345 to enable data transfer, singular entry point for events that are triggered and instigate business logic transactions with the following on-board subsystems and a base station:
   - Mission Computer subsystem present in the vehicle control system 275 (MCS interface 330)
   - Base Station subsystem (BS interface 335)
   - Mission Planning subsystem 235 (MPS interface 340)
   - Health and Usage Monitoring System subsystem 220, 225 (HUMS interface 345)
Application layer 320: provides an interface directly to the SDS 325
Middleware 315: provides computer software that connects software components or applications, and functions at an intermediate layer between applications and operating systems. This layer provides a database management system 350 and an agent framework 355 and supports CORBA RT
Operating system 310: provides the required services and functions which are provided by and are inherent in a real-time operating system (RTOS), and which provide access to, and control of, the computing resources on which the application software, the SDS 325, resides. The SAM 365 and the SRS 295 are each served by different virtual machines, partitioned in known manner to run on the same kernel
Hardware abstraction layer 305: provides an abstraction layer, implemented in software, between the physical hardware and the software that runs on that computer and thus includes interfaces to devices.

The agent framework 355 supports software agents in the SDS 325. There are several FIPA specification implementations available. These include the Java Agent Development Framework ("JADE"), the Lightweight Extensible Agent Platform ("LEAP"), the agent-building toolkit developed by British Telecommunications plc and known as "ZEUS" and the autonomous systems development platform of the AOS Group known as "JACK". Although others would be suitable, the Lost Wax product Aerogility (Java Agent Development Framework) simplifies agent-based application development while ensuring standard compliance through a comprehensive set of FIPA services and FIPA agents. Aerogility is a robust and reliable off-the-shelf package, available from Lost Wax Ltd, known for use in building complex simulations of industrial processes.

As mentioned above, the software agents of the SRS 295 can be based on known reasoning techniques. Several forms of artificial intelligence have already been developed that might be used. Examples are as follows:
Neural networks: these consist of nodes and links between the nodes. Each link has a weight and before a neural network can be used, it must be trained by giving the network examples. In training, the weights are updated and there is no need to put explicit knowledge into the neural network. The biggest disadvantage of a neural network is that it is difficult to keep track of its reasoning process and the reason for strange or undesired behaviour is difficult to find.
Bayesian belief networks: these, like neural networks, consist of nodes and links between the nodes. The links are directed, in that a node contains a fact and a link contains the probability that a fact will be true when the fact in the other node is true. The probabilities can be learned from a large dataset or they can be explicitly set and the success of the application stands with the quality of the probabilities.
Genetic algorithms: multiple models of a system are created, each slightly different. Values for certain properties in the models are learned using natural selection by testing the models and selecting the best. Models similar to the good ones are added to the population and the poor ones discarded. These steps are repeated many times. The advantage of this method is that no extensive domain knowledge is required but it can be slow. It is also not guaranteed that the best solution, or even a good solution, will be found.

## Claims

1. A safety management system for equipment having a safety monitoring and control system, the equipment being adapted to operate in a real-time environment, the safety management system comprising:
i) an input and an output;
ii) a non-deterministic processor adapted to receive monitoring data generated by the safety monitoring and control system and delivered to the safety management system via said input, to process the monitoring data in relation to one or more capabilities of the equipment, and to send control data, based on the processed monitoring data, for use by the safety monitoring and control system in controlling the equipment; and
iii) a deterministic processor for monitoring behaviour of the non-deterministic processor, for processing the control data sent by the non-deterministic processor and for sending control signals comprising control data to the output of the safety management system.

2. A system according to Claim 1 wherein the deterministic processor comprises timing equipment for monitoring time-critical behaviour of the non-deterministic processor in responding to received monitoring data.

3. A system according to either one of Claims 1 or 2 wherein the deterministic processor comprises a control data store and a safety data store, and is adapted to process the control data sent by the non-deterministic processor against safety data stored in the safety data store, the control data in control signals sent to the output of the safety management system being selectable from control data received from the non-deterministic processor and/or control data stored in the control data store.

4. A system according to Claims 2 and 3 wherein selection of the control data is determined by said time-critical behaviour and/or the outcome of processing the control data sent by the non-deterministic processor against safety data stored in the safety data store.

5. A system according to either one of Claims 3 or 4 wherein the safety data store is constructed for storing safety-related rules, the deterministic processor further comprises a rules engine and the processing of the control data is done by running the rules engine using one or more safety-related rules stored in the safety data store to identify control data that would be unsafe if used in sending a control signal to the control system.

6. A system according to any one of the preceding claims wherein the deterministic processor further comprises a monitoring data processor for processing the monitoring data generated by the safety monitoring and control system in relation to one or more capabilities of the equipment.

7. A system according to any one of the preceding claims wherein the deterministic processor and the non-deterministic processor are supported, in use, by separate operating systems.

8. A system according to any one of the preceding claims wherein the deterministic processor and the non-deterministic processor are adapted to communicate with one another, in use, via an applications programming interface.

9. A system according to any one of the preceding claims wherein the deterministic processor is connected between the input of the safety management system and the non-deterministic processor such that the non-deterministic processor receives the safety monitoring data only via the deterministic processor.

10. A safety management system for equipment having a control system operating in a real-time environment, the safety management system comprising a deterministic processor and a non-deterministic processor, the deterministic processor having an input for receiving monitoring data in relation to the equipment and being adapted to pre-process received monitoring data for selective delivery to the non-deterministic processor, the processors each being adapted to respond to received monitoring data by producing control data for use by the control system, in accordance with processed monitoring data.

11. A system according to Claim 10 wherein the deterministic processor is adapted to pre-process received monitoring data for said selective delivery by:
a) determining a maximum response time for producing control data and a minimum processing time required by the non-deterministic processor to process the received monitoring data;
b) comparing the maximum and minimum times determined at step a); and
c) either delivering monitoring data to the non-deterministic processor for processing, or producing said control data, in dependence on the outcome of step b).

12. A system according to either one of Claims 10 or 11 wherein the deterministic processor comprises a behaviour monitor for monitoring behaviour of the non-deterministic processor, and a control data processor for receiving and processing control data produced by the non-deterministic processor.

13. A system according to any one of the preceding claims in which the deterministic processor is connected in use to receive monitoring data from more than one source and/or of more than one type.

14. A system according to any one of the preceding claims wherein the non-deterministic processor comprises one or more software agents.

15. A system according to any one of the preceding claims for use in equipment adapted to operate autonomously.

16. Equipment comprising a safety management system according to any one of the preceding claims.

17. An autonomous vehicle comprising a safety management system according to any one of the preceding claims.

18. A method of managing equipment having a safety monitoring and control system operating in a real-time environment, the method comprising:
i) using a non-deterministic processor to receive safety monitoring data generated by the safety monitoring and control system, to process the safety monitoring data in relation to one or more capabilities of the equipment and to send control data, based on the processed safety monitoring data, for use by the control system in controlling the equipment; and
ii) using a deterministic processor to monitor behaviour of the non-deterministic processor, to receive and process the control data sent by the non-deterministic processor and to output control data for use by the safety monitoring and control system in controlling the equipment.

19. A method according to Claim 18 for managing equipment operating autonomously.

20. A method according to either one of Claims 18 or 19, further comprising the step of using the deterministic processor to receive the safety monitoring data from the safety monitoring and control system and to pre-process it for selective delivery to the non-deterministic processor.
